(19) Europäisches Patentamt
European Patent Office
Office européen des brevets

(11) EP 0 463 045 B1

(12) **EUROPEAN PATENT SPECIFICATION**

(45) Date of publication and mention
of the grant of the patent:
**28.08.1996 Bulletin 1996/35**

(21) Application number: **90904872.0**

(22) Date of filing: **14.03.1990**

(51) Int Cl.⁶: **C01B 33/18**

(86) International application number:
**PCT/GB90/00384**

(87) International publication number:
**WO 90/10596 (20.09.1990 Gazette 1990/22)**

(54) **IMPROVED VITREOUS SILICA PRODUCTS**

GLASARTIGE SILICIUMDIOXIDPRODUKTE

PRODUITS AMELIORES DE SILICE VITREUSE

(84) Designated Contracting States:
**AT BE CH DE DK ES FR GB IT LI LU NL SE**

(30) Priority: **15.03.1989 GB 8905966**

(43) Date of publication of application:
**02.01.1992 Bulletin 1992/01**

(73) Proprietor: **TSL GROUP PLC**
**Tyne and Wear NE28 6DG (GB)**

(72) Inventors:
• **WELLS, Peter, John 167 Aycliffe Crescent**
**Tyne and Wear NE9 7DH (GB)**

• **SAYCE, Ian, George 21 Crabtree Road**
**NE43 7NX (GB)**
• **SMITHSON, Alan 12 Pevensey Close**
**Tyne and Wear NE29 9HW (GB)**

(74) Representative: **Newby, John Ross et al**
**J.Y. & G.W. Johnson**
**Furnival House**
**14/18 High Holborn**
**London WC1V 6DE (GB)**

(56) References cited:
**DE-A- 2 904 199**    **DE-A- 3 016 010**
**DE-B- 2 313 204**    **DE-C- 2 909 815**
**US-A- 4 113 844**

## Description

Technical Field

The present invention relates to the formation of a pure or doped synthetic vitreous silica product by the vapour phase reaction of a volatile compound of silicon. The final product may be in the form of an agglomerated mass of porous silica soot adapted for subsequent densification or a fully densified body made from vitreous silica. In some applications, the silica may be deposited on a substrate, which may itself be made from silica. The deposited silica may be doped with other elements during or after deposition.

The use of volatile silicon compounds in this type of process is well known. US-A-4038370 discloses that silane ($SiH_4$) may be oxidised to silica fume, and the fume may be deposited on a substrate to yield a vitreous silica product.

Silane is however expensive, and dangerously pyrophoric. It is thus more common to use a halide as volatile feedstock, and the use of silicon tetrachloride is now widespread throughout the fibre optic and vitreous silica industries. Silicon tetrachloride may thus be oxidised. e.g. in a thermal plasma to give silica fume, and this fume may be deposited on a substrate to give pure vitreous silica containing a low level of hydroxyl (OH), as is described in our GB-A-1061042. The reaction proceeds as follows:

$$SiCl_4 + O_2 \rightarrow SiO_2 + 2Cl_2$$

This reaction is exploited commercially in the manufacture of the "water-free" synthetic vitreous silica sold by us under the Registered Trade Mark "WF Spectrosil", which typically contains less than 2 ppm of OH.

As an alternative, silicon tetrachloride may be fed into an oxyhydrogen flame. Under these circumstances, the reaction is described as flame-hydrolysis, i.e.

$$SiCl_4 + 2H_2O \rightarrow SiO_2 + 4HCl$$

The silica may be generated as a fume which can be collected as a porous soot body to be sintered to a pore-free vitreous product in a later process and this is described in US-A-2272342, US-A-3806570 and US-A-4224046. Alternatively the fume may be deposited at such a temperature that it sinters directly to a pore-free vitreous product. In this case the vitreous product is normally found to have a higher level of hydroxyl, but otherwise exhibits very high purity. This is the basis of the manufacture of the optical quality synthetic vitreous silica sold by us under the Registered Trade Mark "Spectrosil" which typically contains about 1000 ppm of OH.

When a low OH content is sought from a product of flame hydrolysis, it is common practice to collect the silica fume as a porous soot body, and subsequently to heat that body in a dehydrating atmosphere containing, e.g. chlorine, or thionyl chloride, before sintering for example in a helium atmosphere, to achieve a pore-free vitreous product. This is the basis of the OVD (Outside Vapour Deposition) and VAD (Vapour-phase Axial Deposition) processes widely used for the manufacture of preforms for optical fibres.

It is desirable in these processes to achieve a large particle fume and thus to manufacture a high density soot with large pore size. The use of silicon tetrachloride as feedstock yields silica fume particles whose size depends on the concentration of vapour species, upon flame temperature and upon the retention time, i.e. the time that the growing particles spend in the flame of the synthesis torch. A conventional co-annular torch, as used in the VAD process will give silica particles typically around 0.08 microns in diameter. H. Suda et al (Proc. 10th Euro. Conf. Opt. Comm. (E.C. O.C.) Sept, 3-6, 1984, Stuttgart, p. 296/7, 1984) - describe how the typical particle size of the fume product can be increased to 0.21 microns by using a "double flames torch. This torch effectively increases the length of the flame and thereby the retention time of the silica particles. The process of growth of the particles in the flame is thought to be by Brownian collision, followed by coalescence. The longer the particles reside in the flame, the greater the probability of collision between the particles and the larger they become. Coalescence proceeds so long as the temperature remains high enough for such a process, and thereafter the aggregated micro-particles merely form an open chain structure. It is thus advantageous to use a highly exothermic feedstock as this helps to maintain a high flame temperature and thus to promote growth of the particles for a prolonged period.

One of the major drawbacks of using silicon tetrachloride, or any chlorine-containing silicon compound as a precursor for the manufacture of synthetic silica, is the release of chlorine during oxidation, or hydrogen chloride during hydrolysis as a by-product. Both these chemicals are poisonous and corrosive, and any process using silicon tetrachloride, or other chlorosilane compounds, requires extensive gas-extraction and -scrubbing facilities to make it environmentally acceptable.

Despite the difficulties and cost of such scrubbing processes, silicon tetrachloride and certain other chlorosilanes are almost universally used as feedstocks to the above-mentioned processes for the manufacture of silica fume and synthetic vitreous silica. The use of silane ($SiH_4$) is unusual, costly and hazardous. There is limited mention of the use of alternative silicon compounds, but methyl and ethyl orthosilicates have been proposed for the manufacture of silica powders in DE-A-3500080 and for the manufacture of vitreous products in Japanese unexamined application 85

2

108338.

The almost universal use of chlorine-containing feedstocks is the more remarkable in that it is impossible thereby to achieve a silica product which is free from contamination by chlorine, which is for some purposes an undesirable impurity.

DE-A-2909815 and DE-A-3016010 disclose the preparation of silica fume from volatile silicon compounds but neither discloses or suggests the manufacture of a transparent vitreous silica product.

Summary of the Invention

The present invention relates to a process for the manufacture of a transparent synthetic vitreous silica product by vapour-phase oxidation of a silica precursor material in a flame and collection of the silica from the flow of combustion products by deposition either as an agglomerated mass of porous silica soot adapted for subsequent densification or as a fully densified body, characterised in that not less than 60% of the silica in the deposited product is derived by oxidation of

(A) One or more straight chain volatile chlorine-free polysiloxane compounds of the general formula

$$R_3 Si . O(SiR_2O)_n . Si R_3$$

where n is any integer including zero, and each R is independently selected from

(i) one or more alkyl group(s) of the general formula

$$C_m . H_{2m+1}$$

where m is any integer greater than zero,

(ii) one or more aromatic phenyl group(s)

$$C_6H_5-$$

or a substituted aromatic group

(iii) the hydroxyl group

$$HO-$$

(iv) the vinyl group

$$H_2C=CH-$$

and

(v) the hydride group

$$H-$$

and/or of

(B) one or more cyclic volatile chlorine - free polysiloxane compounds of the general formula

$$Si_pO_p(R)_{2p}$$

where p is an integer greater than 2, and each R is one or more of the chemical groups defined at (i) to (v) above, or (C) a mixture of (A) and (B).

More than one type of substituent group may be present in the same molecule.
Cyclic molecules covered by the invention have the general formula

$$Si_nO_n(R)_{2n}$$

where n is greater than 2, preferably greater than 3, and R is a substituent group as defined above or a mixture of such groups.

The invention includes the use of mixtures of straight chain molecules as defined above, mixtures of such cyclic molecules, and mixtures of straight chain and cyclic molecules, and also feedstocks containing other species, but of which not less than 60% of the contained oxidisable silicon species arise from the above-defined molecules.

As noted above, the final size of the particles of silica fume is determined by both nucleation and growth processes. It is preferable for the achievement of large particles that the molecular weight of the vaporised silica precursor be high, and it is a peculiar advantage of the preferred precursor compounds of the invention that the basic skeleton of vitreous silica is already in place, and the species already contain the polymeric $(SiO)_n$ chain or ring structure. It is thus possible to achieve a smaller number of primary nuclei, and a larger mean size for the ultimate fume particles.

Excessive carbon is undesirable in combustion reactions to achieve pure silica, since, if combustion is not complete, carbon or silicon carbide may be formed. For this reason, the preferred alkyl group is the methyl group $CH_3$. For the same reason, higher molecular weight silicone species and cyclic molecules may be preferred as these also contain a lower proportion of carbon atoms. Of course, availability, cost, and purity are other factors which may affect the choice of preferred species.

It is a feature of all precursor compounds encompassed by the present invention that in the presence of excess oxygen they burn to form carbon dioxide, water and synthetic silica fume. This fume may be deposited either as core-free material or as a porous soot on a substrate. which may include any suitably refractory and non-contaminating material including carbon/graphite, alumina. or vitreous silica which again may be either a pore-free material, or a porous soot body. The absence of corrosive gases (e.g. $HC1$, $Cl_2$) in the hot vapours renders this process much simpler, and cheaper, than when silica is derived from a chlorine-containing feedstock and it is easier to avoid corrosion-induced contamination. in the deposited product. Finally of course the deposited product is itself free from chlorine contamination.

The precursor or feedstock compound(s) may be fed to a suitable synthesis burner, the energy input of which may be supplemented by additional combustible gas. for example hydrogen, or methane, together with sufficient oxygen to effect combustion of the contained species. Unlike the commonly used feedstock, silicon tetrachloride, the feedstock compounds of this invention themselves exhibit a substantial heat of combustion. This permits both enhanced temperatures within the reacting core of the burner, and higher concentrations of Si/O vapour species. These are both desirable requirements giving rise, in a suitably designed synthesis burner to larger fume particles than is possible using silicon tetrachloride as feedstock.

It follows from the high heat of combustion of the preferred feedstocks of the invention that, in a suitably designed silica synthesis burner supplied with precursor. oxidant (for example oxygen), and supplemental hydrogen or methane, at least a third and preferably more than half of the combustion energy of the synthesis flame may be derived from combustion of the precursor. Indeed it is possible to design synthesis burners in which substantially all (e.g. 90% or more) of the combustion energy of the burner is provided by combustion of the precursor compound and these novel features of the synthesis of silica represent further aspects of this invention.

Suitably at least one half of the energy liberated in the combustion process is derived from combustion of the silica precursor material, and the silica is collected as a porous mass of synthetic silica.

Suitably at least one third of the energy liberated in the combustion process is derived from combustion of the silica precursor material. and the silica is collected as a substantially pore-free vitreous product.

The plume of silica fume is projected on to substrate as described above. The collection efficiency is an important factor in the economics of synthetic silica production, and it is recognised that one of the principal mechanisms of collection of hot fume on a substrate is the process of thermophoresis, i.e. the tendency of ultra-fine particles in a hot gas stream wnich exhibits a thermal gradient to be propelled toward the region of lower temperature. It is thus advantageous to generate the fume in a hot concentrated plume, and project this fume onto a cooler substrate. An important feature of the feedstock compounds included in the present invention is their ability to burn. in a suitably designed synthesis burner. to give a very high temperature plume of silica fume, gaining maximum benefit from the effect of thermophoresis.

A doping addition may be made to the vapour-phase oxidation to modify the properties of the synthetic silica product. Suitably the doping addition includes the vapour of an oxidisable or hydrolysable compound selected from the group consisting of aluminium, titanium, boron and fluorine.

The invention also extends to synthetic silica products made by the process of the invention (e.g. sootcoated substrates, sintered articles and fully densified products).

## Examples of the Invention

The invention will now be further described with reference to the following illustrative Examples:

## Example 1

A heated coannular synthesis burner. comprising a central feed orifice surrounded by a first and second annular channel, was supplied with flows of vapour and gases as follows:

Central orifice: octamethylcyclotetrasiloxane vapour, 0.086 $m^3$/h, plus nitrogen, 0.03 $m^3$/h.

First annular channel: hydrogen

Second annular channel:oxygen

After ignition, the burner provided a steady flame the central part of which comprised a brightly luminous plume of silica fume, which was directed on to the side of a cylindrical graphite substrate of diameter 100 mm, rotating in a glass-working lathe. The burner was mounted on a carriage movable parallel to the axis of the cylindrical graphite substrate, causing the plume of fume progressively and repeatedly to scan the length of the substrate, leading to radial growth on the substrate of an agglomerated white deposit of synthetic silica soot. The burner was withdrawn sufficiently at the end of each pass to maintain a controlled burner-to-substrate distance. The temperature in the deposition zone was maintained at an approximately constant value within the range 1000-1300°C. The deposition was continued for a period of 8 hours.

On cooling and after removal from the graphite substrate, the soot body weighed approximately 5 kg, and had a mean density of 0.4 g/$cm^3$. The body was sintered under vacuum, to give a transparent tube of synthetic vitreous silica glass, of high purity, free from chlorine and with a hydroxyl (OH) content of less than 1 ppm.

Example 2

A heated coannular synthesis burner, comprising a central feed orifice and four successive annular channels, was supplied with flows of vapour and gases as follows:

Central orifice: decamethylcyclopentasiloxane vapour 0.054 $m^3$/h plus hydrogen, 0.12 $m^3$/h

First annular channel: hydrogen

Second annular channel:oxygen

Third annular channel: hydrogen

Fourth annular channel:oxygen.

The axis of the burner was directed at the hemispherical domed end of a cylindrical substrate of vitreous silica, diameter 150 mm, whose surface was maintained at an approximately constant temperature within the range 1500-1950°C.

A bubble-free agglomerated deposit was thus obtained, comprising a chlorine-free synthetic vitreous silica of high purity and high optical transparency and with a hydroxyl (OH) content of 830 ppm.

Example 3

A coannular synthesis burner of similar design to that used in Example 1 was supplied with flows of vapour and gases as follows:

Central orifice: octamethylcyclotetrasiloxane vapour, 0.086 $m^3$/h, plus aluminium 2,4-pentane-dionate vapour, 0.014 $m^3$/h, plus nitrogen, 0.03 $m^3$/h

First annular channel: hydrogen

Second annular channel:oxygen

The flame was directed onto the hemispherical domed end of a cylindrical silica substrate which was rotating about its axis while supported from the other end in a glass-working lathe. A white deposit of alumina-doped silica soot built up on the end of the substrate, which was continuously withdrawn to maintain a constant burner-to-substrate distance. The temperature of the deposition zone was typically 1140° C.

After a period of 6 hours the deposition was suspended, and the agglomerated soot body was sintered under vacuum, yielding a body of bubble-free alumina-doped synthetic vitreous silica, with alumina content approximately 1.5 mole%.

Example 4

The conditions of Example 3 were repeated, except that the flows of gas and vapour to the central orifice of the burner were also supplemented by the addition of 0.0052 $m^3$/h of titanium tetraisobutoxide vapour. The soot product was thus doped with both alumina and titania, and after sintering the glass product was found to contain approximately 1.5 mole% alumina and 1.5 mole% titania.

Example 5

The conditions of Example 3 were repeated, except that the flow of aluminium 2,4-pentanedionate was replaced by a flow of 0.0104 $m^3$/h of titanium tetraisobutoxide vapour. The soot product was thus singly doped with titania, and after sintering, the glass product was found to contain approximately 3.0 mole% titania.

Example 6

A coannular synthesis burner of similar design to that used in Example 1 was supplied with flows of vapour and gases as follows:

Central orifice: octamethylcyclotetrasiloxane vapour, 0.086 $m^3$/h plus boron trifluoride diethyletherate vapour, 0.005 $m^3$/h plus nitrogen, 0.03 $m^3$/h.

First annular channel: hydrogen

Second annular channel: oxygen.

The flame was directed onto the side of a circular cylindrical rod of pure synthetic vitreous silica of diameter 75 mm, rotating in a glass-working lathe. The burner carriage was moved parallel to the axis of the rod causing the plume of doped silica fume progressively and repeatedly to scan the length of the substrate rod, leading to radial growth on the substrate of a white deposit of an agglomerated mass of doped synthetic vitreous silica soot. The temperature in the deposition zone was approximately 1090°C. The deposition was continued for a period of 2 hours.

On cooling, the vitreous silica rod and adhering doped soot layer were subjected to a zone-sintering operation which vitrified the soot leading to a step-index optical fibre preform with a core of pure synthetic vitreous silica and a cladding of synthetic vitreous silica doped with boron and fluorine. The product was drawn to step-index fibre of diameter 200 microns, which had a numerical aperture of 0.16, and an attenuation at 820 nm of 7 dB/km.

The following summary demonstrates the use of the present invention.

Product

Soot Body     - collected on a substrate (which need not be silica)
            - collected on a vitreous silica rod, or tube (e.g. on a fibre optic preform).
            - collected on a crucible (inner and/or outer surface)

Vitreous Body     - collected on a substrate (which need not be silica)
            - collected on a vitreous silica rod, or tube (e.g. on a fibre optic preform).
            - collected on a crucible (inner and/or outer surface)

Doped Product     - $Al_2O_3$, $GeO_2$, $P_2O_5$ included as synthetic product is created and/or deposited (for example to raise refractive index)
            - $B_2O_3$, F included as synthetic product is created and/or deposited (for example to lower refractive index).

Preferred Feedstocks - Include hexamethyldisiloxane and the straight chain or cyclic tetrameric or pentameric siloxanes. Specifically the siloxanes Octamethylcyclotetrasiloxane and Decamethylcyclopentasiloxane and their mixtures have been found to be especially suitable.

## Claims

**Claims for the following Contracting States : AT, BE, CH, LI, DE, DK, ES, FR, IT, LU, NL, SE**

1.  A process for the manufacture of a synthetic vitreous silica product by vapour-phase oxidation of a silica precursor material in a flame from a suitable synthesis burner and collection of the silica from the flow of combustion products by deposition either as an agglomerated mass of porous silica soot adapted for subsequent densification or as a fully densified body, <u>characterised in that</u> not less than 60% of the silica in the deposited product is derived by oxidation of

    A) one or more straight chain volatile chlorine-free polysiloxane compounds of the general formula

    $$R_3\ Si\ .\ O(SiR_2O)_n\ .\ Si\ R_3$$

    where n is any integer including zero, and each R is independently selected from

    (i) one or more alkyl group(s) of the general formula

    $$C_m\ .\ H_{2m+1}$$

    where m is any integer greater than zero,

    (ii) one or more aromatic phenyl group(s)

    $$C_6H_5-$$

    or a substituted aromatic group

    (iii) the hydroxyl group

    $$HO-$$

    (iv) the vinyl group

    $$H_2C=CH-$$

    and

    (v) the hydride group

    $$H-$$

    and/or of

    B) one or more cyclic volatile chlorine-free polysiloxane compounds of the general formula

    $$Si_p\ O_p\ (R)_{2p}$$

    where p is an integer greater than 2, and each R is selected from the chemical groups defined at (i) and (ii) above, or

    C) a mixture of A) and B),

2.  A process according to claim 1, <u>characterised in that</u> the vaporised silica precursor material contains a polymeric $(SiO)_n$ chain and/or ring structure.

3.  A process as claimed in claim 1 or claim 2, <u>characterised in that</u> at least one half of the energy liberated in the combustion process is derived from combustion of the silica precursor material, and the silica is collected as a porous mass of synthetic silica.

4.  A process as claimed in claim 1 or claim 2, <u>characterised in that</u> at least one third of the energy liberated in the combustion process is derived from combustion of the silica precursor material, and the silica is collected as a substantially pore-free vitreous product.

EP 0 463 045 B1

5. A process as claimed in any one of claims 1 to 3, <u>characterised in that</u> the temperature of the substrate in the deposition zone is maintained in the range 1000 - 1300°C, and the product is collected as a porous mass of synthetic silica.

6. A process as claimed in any one of claims 1 to 4, <u>characterised in that</u> the temperature of the substrate in the deposition zone is maintained in the range 1500 - 1950°C, and the product is collected as a pore-free vitreous product.

7. A process as claimed in any one of claims 1 to 6, <u>characterised in that</u> the synthetic silica body after densification of an agglomerated mass of soot or collection as a fully densified body is transparent.

8. A process as claimed in any one preceding claim, <u>characterised in that</u> the silica precursor material is a cyclo-siloxane of the general formula $Si_nO_n(CH_3)_{2n}$ where n equals 4 or 5.

9. A process as claimed in any one of claims 1 to 7, <u>characterised in that</u> the silica precursor material is hexamethyldisiloxane.

10. A process as claimed in any one preceding claim, <u>characterised in that</u> a doping addition is made to the vapour-phase oxidation to modify the properties of the synthetic silica product.

11. A process according to claim 10, <u>characterised in that</u> the doping addition is a halogen-free compound in vapour form.

12. A process as claimed in claim 10 or claim 11, <u>characterised in that</u> the doping addition includes the vapour of an oxidisable or hydrolysable compound of at least one of aluminium, germanium, phosphorus, titanium, boron or fluorine.

13. A process as claimed in any one of the preceding claims, <u>characterised in that</u> the vapour-phase oxidation is carried out using a synthesis burner fed with oxygen and a combustible gas.

14. A process according to claim 13, <u>characterised in that</u> the combustible gas is hydrogen, methane or a mixture of these gases.

15. A process according to claim 13 or 14, <u>characterised in that</u> the synthesis burner is of coannular design.

16. A process according to claim 13, 14 or 15, <u>characterised in that</u> an inner orifice of the synthesis burner is fed with precursor vapour, optionally together with a carrier gas, and an outer channel is fed with oxygen, said inner orifice being spaced from said outer channel by a further channel fed with combustible gas.

17. A process according to any one preceding claim, <u>characterised in that</u> the precursor vapour is diluted with a carrier gas comprising hydrogen or nitrogen.

18. A process according to any one of claims 13 to 17, <u>characterised in that</u> the synthesis burner is heated.

19. A process according to any one of claims 13 to 18, <u>characterised in that</u> the distance between the synthesis burner and the deposited product is monitored and adjusted to maintain a controlled burner-to-substrate distance.

20. A process according to any one of claims 1 to 5 or 7 to 19, <u>characterised in that</u> the agglomerated mass of porous silica soot (when such is the product of the deposition step) is sintered (in a manner known per se) to form a transparent synthetic silica glass product.

21. A process according to any one of claims 1 to 5 or 7 to 19, <u>characterised in that</u> the agglomerated mass of porous silica soot (when such is the product of the deposition step) is sintered in vacuum to form a transparent synthetic silica glass product.

22. A process according to claim 21, <u>characterised in that</u> the transparent synthetic silica glass product has a very low hydroxyl (OH) content.

8

23. A process according to any one preceding claim, <u>characterised in that</u> the synthetic silica body after densification of an agglomerated mass of soot or collected as a fully densified body is substantially free from chlorine.

24. A process according to any one preceding claim, <u>characterised in that</u> the deposition takes place upon a substrate made from one of carbon, graphite, alumina, pore-free silica or porous silica soot.

25. A process according to any one preceding claim, <u>characterised in that</u> the deposited product is in the form of a cylindrical body, a tubular body, a crucible or an optical fibre preform.

26. A process for making a non-porous body of high purity silica doped with $P_2O_5$ and/or at least one metal oxide selected from the group consisting of aluminium, germanium, titanium and boron comprising the steps of:

(a) producing a gas stream containing a vaporisable, chlorine-free, silicon-containing compound capable of being converted through thermal decomposition with oxidation or flame hydrolysis to $SiO_2$ and one or more vaporisable compounds capable of being converted through oxidation or flame hydrolysis to $P_2O_5$ and/or at least one metal oxide selected from the group consisting of aluminium, germanium, titanium and boron;
(b) passing said gas stream into the flame of a suitable synthesis burner to form $SiO_2$ soot doped with $P_2O_5$ and/or at least one metal oxide selected from the group consisting of aluminium, germanium, titanium and boron;
(c) depositing said $SiO_2$ soot onto a substrate; and
(d) either essentially simultaneously with said deposition or subsequently thereto consolidating said deposit of $SiO_2$ soot into a non-porous body;

<u>characterised in that</u> said vaporisable, silicon-containing compound is a chlorine-free polymethylsiloxane.

27. A process according to claim 26, <u>characterised in that</u> said polymethylsiloxane is hexamethyldisiloxane.

28. A process according to claim 26, <u>characterised in that</u> said polymethylsiloxane is a polymethylcyclosiloxane.

29. A process according to claim 28, <u>characterised in that</u> said polymethylcyclosiloxane is selected from the group consisting of octamethylcyclotetrasiloxane, decamethylcyclopentasiloxane and mixtures thereof.

30. A process according to any one of claims 26 to 29, <u>characterised in that</u> said vaporisable compound capable of being converted to $P_2O_5$ and/or at least one metal oxide selected from the group consisting of aluminium, germanium, titanium and boron is a chlorine-free compound.

31. A process according to any one of claims 26 to 30, <u>characterised by</u> its use for making optical waveguide fibres of high purity fused silica through the outside vapour deposition process by depositing the $SiO_2$ soot onto a substrate, consolidating the deposit of $SiO_2$ soot into a non-porous, transparent glass body, and drawing optical waveguide fibres from said body.

32. A process according to any one of claims 26 to 31, <u>characterised in that</u> said $SiO_2$ soot is deposited on a substrate by axial vapour deposition.

33. A process according to any one of claims 26 to 32, <u>characterised in that</u> said gas stream comprises an inert gas.

34. A process according to any one of claims 26 to 30, <u>characterised in that</u> said non-porous body is transparent.

35. A process according to claim 26, in which a non-porous body of high purity fused silica glass doped with titania is produced, <u>characterised in that</u> said silicon-containing compound is a chlorine-free polymethylsiloxane and in that a chlorine-free titanium-containing compound is utilised as dopant, whereby no chlorine-containing vapours are emitted during the making of said non-porous body.

**Claims for the following Contracting State : GB**

1. A process for making a non-porous body of high purity silica doped with $P_2O_5$ and/or at least one metal oxide selected from the group consisting of aluminium, germanium, titanium and boron comprising the steps of:

(a) producing a gas stream containing a vaporisable, chlorine-free, silicon-containing compound capable of being converted through thermal decomposition with oxidation or flame hydrolysis to $SiO_2$ and one or more vaporisable compounds capable of being converted through oxidation or flame hydrolysis to $P_2O_5$ and/or at least one metal oxide selected from the group consisting of aluminium, germanium, titanium and boron;

(b) passing said gas stream into the flame of a suitable synthesis burner to form $SiO_2$ soot doped with $P_2O_5$ and/or at least one metal oxide selected from the group consisting of aluminium, germanium, titanium and boron;

(c) depositing said $SiO_2$ soot onto a substrate; and

(d) either essentially simultaneously with said deposition or subsequently thereto consolidating said deposit of $SiO_2$ soot into a non-porous body;

characterised in that said vaporisable, silicon-containing compound is a chlorine-free polymethylsiloxane.

2.  A process according to claim 1, characterised in that said polymethylsiloxane is hexamethyldisiloxane.

3.  A process according to claim 1, characterised in that said polymethylsiloxane is a polymethylcyclosiloxane.

4.  A process according to claim 3, characterised in that said polymethylcyclosiloxane is selected from the group consisting of octamethylcyclotetrasiloxane, decamethylcyclopentasiloxane and mixtures thereof.

5.  A process according to any one preceding claim, characterised in that said vaporisable compound capable of being converted to $P_2O_5$ and/or at least one metal oxide selected from the group consisting of aluminium, germanium, titanium and boron is a chlorine-free compound.

6.  A process according to any one preceding claim, characterised by its use for making optical waveguide fibres of high purity fused silica through the outside vapour deposition process by depositing the $SiO_2$ soot onto a substrate, consolidating the deposit of $SiO_2$ soot into a non-porous, transparent glass body, and drawing optical waveguide fibres from said body.

7.  A process according to any one preceding claim, characterised in that said $SiO_2$ soot is deposited on a substrate by axial vapour deposition.

8.  A process according to any one preceding claim, characterised in that said gas stream comprises an inert gas.

9.  A process according to any one of claims 1 to 5, characterised in that said non-porous body is transparent.

10. A process according to claim 1, in which a non-porous body of high purity fused silica glass doped with titania is produced, characterised in that said silicon-containing compound is a chlorine-free polymethylsiloxane and in that a chlorine-free titanium-containing compound is utilised as dopant, whereby no chlorine-containing vapours are emitted during the making of said non-porous body.

**Patentansprüche**

**Patentansprüche für folgende Vertragsstaaten : AT, BE, CH, LI, DE, DK, ES, FR, IT, LU, NL, SE**

1.  Verfahren zur Herstellung eines Produkts aus synthetischem Quarzglas durch Dampfphasenoxidation eines Siliciumdioxidvorläufermaterials in der Flamme eines geeigneten Synthesebrenners und Gewinnung des Siliciumdioxids aus dem Fluß der Verbrennungsprodukte durch Abscheidung entweder als agglomerierte Masse aus porösem Siliciumdioxid-"Soot", die sich zur anschließenden Verdichtung eignet, oder als vollverdichteter Körper, dadurch gekennzeichnet, daß in dem abgeschiedenen Produkt mindestens 60% des Siliciumdioxids aus der Oxidation

    A) einer oder mehrerer geradkettiger, flüchtiger, chlorfreier Polysiloxanverbindungen der allgemeinen Formel

    $$R_3Si . O(SiR_2O)_n . SiR_3,$$

    worin n für eine ganze Zahl einschließlich Null steht und R jeweils unabhängig ausgewählt ist unter

(i) einer oder mehreren Alkylgruppen der allgemeinen Formel

$$C_m \cdot H_{2m+1},$$

worin m für eine ganze Zahl größer als Null steht,
(ii) einer oder mehreren aromatischen Phenylgruppen

$$C_6H_5-$$

oder einer substituierten aromatischen Gruppe
(iii) der Hydroxylgruppe

$$HO-$$

(iv) der Vinylgruppe

$$H_2C=CH-$$

und
(v) der Hydridgruppe

$$H-,$$

und/oder

B) einer oder mehrerer cyclischer, flüchtiger, chlorfreier Polysiloxanverbindungen der allgemeinen Formel

$$Si_pO_p(R)_{2p},$$

worin p für eine ganze Zahl größer als 2 steht und R jeweils unter den oben unter (i) und (ii) definierten chemischen Gruppen ausgewählt ist, oder
C) eines Gemischs von A) und B) stammen.

2. Verfahren nach Anspruch 1, dadurch gekennzeichnet, daß das verdampfte Siliciumdioxidvorläufermaterial eine polymere $(SiO)_n$-Ketten- und/oder -Ringstruktur enthält.

3. Verfahren nach Anspruch 1 oder Anspruch 2, dadurch gekennzeichnet, daß mindestens die Hälfte der bei dem Verbrennungsvorgang freigesetzten Energie aus der Verbrennung des Siliciumdioxidvorläufermaterials stammt und man das Siliciumdioxid als poröse Masse aus synthetischem Siliciumdioxid gewinnt.

4. Verfahren nach Anspruch 1 oder Anspruch 2, dadurch gekennzeichnet, daß mindestens ein Drittel der bei dem Verbrennungsvorgang freigesetzten Energie aus der Verbrennung des Siliciumdioxidvorläufermaterials stammt und man das Siliciumdioxid als weitgehend porenfreies, glasartiges Produkt gewinnt.

5. Verfahren nach einem der Ansprüche 1 bis 3, dadurch gekennzeichnet, daß man das Substrat in der Abscheidungszone bei einer Temperatur im Bereich von 1000 - 1300°C hält und das Produkt als poröse Masse aus synthetischem Siliciumdioxid gewinnt.

6. Verfahren nach einem der Ansprüche 1 bis 4, dadurch gekennzeichnet, daß man das Substrat in der Abscheidungszone bei einer Temperatur im Bereich von 1500 - 1950°C hält und das Produkt als porenfreies, glasartiges Produkt gewinnt.

7. Verfahren nach einem der Ansprüche 1 bis 6, dadurch gekennzeichnet, daß der Körper aus synthetischem Siliciumdioxid nach der Verdichtung einer agglomerierten Soot-Masse oder der Isolierung als vollverdichteter Körper transparent ist.

8. Verfahren nach einem der vorhergehenden Ansprüche, dadurch gekennzeichnet, daß man als Siliciumdioxidvorläufermaterial ein Cyclosiloxan der allgemeinen Formel $Si_nO_n(CH_3)_{2n}$, worin n gleich 4 oder 5 ist, einsetzt.

9. Verfahren nach einem der Ansprüche 1 bis 7, dadurch gekennzeichnet, daß man als Siliciumdioxidvorläufermaterial Hexamethyldisiloxan einsetzt.

10. Verfahren nach einem der vorhergehenden Ansprüche, dadurch gekennzeichnet, daß man die Dampfphasenoxidation zur Modifizierung der Eigenschaften des Produkts aus synthetischem Siliciumdioxid unter Zugabe eines Dotierzusatzes durchführt.

**11.** Verfahren nach Anspruch 10, <u>dadurch gekennzeichnet</u>, daß man als Dotierzusatz eine halogenfreie Verbindung in Form von Dampf einsetzt.

**12.** Verfahren nach Anspruch 10 oder Anspruch 11, <u>dadurch gekennzeichnet,</u> daß der Dotierzusatz den Dampf einer oxidierbaren oder hydrolysierbaren Verbindung mindestens eines der Elemente Aluminium, Germanium, Phosphor, Titan, Bor oder Fluor enthält.

**13.** Verfahren nach einem der vorhergehenden Ansprüche, <u>dadurch gekennzeichnet,</u> daß man die Dampfphasenoxidation unter Verwendung eines mit Sauerstoff und einem brennbaren Gas gespeisten Synthesebrenners durchführt.

**14.** Verfahren nach Anspruch 13, <u>dadurch gekennzeichnet,</u> daß man als brennbares Gas Wasserstoff, Methan oder ein Gemisch dieser Gase einsetzt.

**15.** Verfahren nach Anspruch 13 oder 14, <u>dadurch gekennzeichnet</u>, daß man einen Synthesebrenner der Mehrringbauweise verwendet.

**16.** Verfahren nach Anspruch 13, 14 oder 15, <u>dadurch gekennzeichnet</u>, daß man eine innere Öffnung des Synthesebrenners mit Vorläuferdampf, gegebenenfalls zusammen mit einem Trägergas, und einen äußeren Kanal mit Sauerstoff speist, wobei die innere Öffnung von dem äußeren Kanal durch einen weiteren, mit brennbarem Gas gespeisten Kanal getrennt ist.

**17.** Verfahren nach einem der vorhergehenden Ansprüche, <u>dadurch gekennzeichnet</u>, daß man den Vorläuferdampf mit einem Wasserstoff oder Stickstoff enthaltenden Trägergas verdünnt.

**18.** Verfahren nach einem der Ansprüche 13 bis 17, <u>dadurch gekennzeichnet,</u> daß man den Synthesebrenner erhitzt.

**19.** Verfahren nach einem der Ansprüche 13 bis 18, <u>dadurch gekennzeichnet,</u> daß man zur Regelung des Abstands Brenner-Substrat den Abstand zwischen Synthesebrenner und abgeschiedenem Produkt kontrolliert und nachstellt.

**20.** Verfahren nach einem der Ansprüche 1 bis 5 oder 7 bis 19, <u>dadurch gekennzeichnet,</u> daß man die agglomerierte Masse aus porösem Siliciumdioxid-Soot (soweit bei der Abscheidung ein derartiges Produkt entsteht) auf an sich bekannte Weise zu einem transparenten Glasprodukt aus synthetischem Siliciumdioxid sintert.

**21.** Verfahren nach einem der Ansprüche 1 bis 5 oder 7 bis 19, <u>dadurch gekennzeichnet</u>, daß man die agglomerierte Masse aus porösem Siliciumdioxid-Soot (soweit bei der Abscheidung ein derartiges Produkt entsteht) im Vakuum zu einem transparenten Glasprodukt aus synthetischem Siliciumdioxid sintert.

**22.** Verfahren nach Anspruch 21, <u>dadurch gekennzeichnet</u>, daß das transparente Glasprodukt aus synthetischem Siliciumdioxid einen sehr niedrigen Hydroxyl(OH)-Gehalt aufweist.

**23.** Verfahren nach einem der vorhergehenden Ansprüche, <u>dadurch gekennzeichnet</u>, daß der Körper aus synthetischem Siliciumdioxid nach dem Verdichten einer agglomerierten Soot-Masse oder dem Gewinnen als vollverdichteter Körper weitgehend chlorfrei ist.

**24.** Verfahren nach einem der vorhergehenden Ansprüche, <u>dadurch gekennzeichnet</u>, daß die Abscheidung auf einem Substrat aus Kohlenstoff, Graphit, Aluminiumoxid, porenfreiem Siliciumdioxid oder porösem Siliciumdioxid-Soot erfolgt.

**25.** Verfahren nach einem der vorhergehenden Ansprüche, <u>dadurch gekennzeichnet</u>, daß das abgeschiedene Produkt die Form eines zylindrischen Körpers, eines rohrförmigen Körpers, eines Tiegels oder eines Vorformlings für Lichtleitfasern hat.

**26.** Verfahren zur Herstellung eines nichtporösen Körpers aus hochreinem, mit $P_2O_5$ und/oder mindestens einem Metalloxid aus der Gruppe, bestehend aus Aluminium, Germanium, Titan und Bor, dotiertem Siliciumdioxid, bei dem man:

(a) einen Gasstrom erzeugt, der eine verdampfbare, chlorfreie, siliciumhaltige Verbindung, die durch thermische Zersetzung unter Oxidation oder durch Flammenhydrolyse in $SiO_2$ überführbar ist, und eine oder mehrere verdampfbare Verbindungen, die durch Oxidation oder durch Flammenhydrolyse in $P_2O_5$ und/oder mindestens ein Metalloxid aus der Gruppe, bestehend aus Aluminium, Germanium, Titan und Bor, überführbar sind, enthält,

(b) den Gasstrom zur Bildung von mit $P_2O_5$ und/oder mindestens einem Metalloxid aus der Gruppe, bestehend aus Aluminium, Germanium, Titan und Bor, dotiertem $SiO_2$-Soot in die Flamme eines geeigneten Synthesebrenners leitet,

(c) den $SiO_2$-Soot auf einem Substrat abscheidet und

(d) entweder im wesentlichen gleichzeitig mit der Abscheidung oder daran anschließend die Ablagerung aus $SiO_2$-Soot zu einem nichtporösen Körper konsolidiert,

dadurch gekennzeichnet, daß man als verdampfbare, siliciumhaltige Verbindung ein chlorfreies Polymethylsiloxan einsetzt.

27. Verfahren nach Anspruch 26, dadurch gekennzeichnet, daß man als Polymethylsiloxan Hexamethyldisiloxan einsetzt.

28. Verfahren nach Anspruch 26, dadurch gekennzeichnet, daß man als Polymethylsiloxan ein Polymethylcyclosiloxan einsetzt.

29. Verfahren nach Anspruch 28, dadurch gekennzeichnet, daß man das Polymethylcyclosiloxan aus der Gruppe, bestehend aus Octamethylcyclotetrasiloxan, Decamethylcyclopentasiloxan und deren Gemischen, auswählt.

30. Verfahren nach einem der Ansprüche 26 bis 29, dadurch gekennzeichnet, daß man als in $P_2O_5$ und/oder mindestens ein Metalloxid aus der Gruppe, bestehend aus Aluminium, Germanium, Titan und Bor, überführbare verdampfbare Verbindung eine chlorfreie Verbindung einsetzt.

31. Verfahren nach einem der Ansprüche 26 bis 30, dadurch gekennzeichnet, daß man es zur Herstellung von Lichtleitfasern aus hochreinem Quarzgut nach dem Verfahren der Dampfabscheidung auf der Außenfläche (Outside Vapour Deposition) durch Abscheiden von $SiO_2$-Soot auf einem Substrat, Konsolidieren der Ablagerung aus $SiO_2$-Soot zu einem nichtporösen, transparenten Glaskörper und Ziehen des Körpers zu Lichtleitfasern anwenden kann.

32. Verfahren nach einem der Ansprüche 26 bis 31, dadurch gekennzeichnet, daß man den $SiO_2$-Soot durch axiale Dampfabscheidung (Axial Vapour Deposition) auf einem Substrat abscheidet.

33. Verfahren nach einem der Ansprüche 26 bis 32, dadurch gekennzeichnet, daß der Gasstrom ein Inertgas enthält.

34. Verfahren nach einem der Ansprüche 26 bis 30, dadurch gekennzeichnet, daß der nichtporöse Körper transparent ist.

35. Verfahren nach Anspruch 26, bei dem man einen nichtporösen Körper aus hochreinem, mit Titandioxid dotiertem Quarzglas erzeugt, dadurch gekennzeichnet, daß man als siliciumhaltige Verbindung ein chlorfreies Polymethylsiloxan und als Dotierstoff eine chlorfreie titanhaltige Verbindung einsetzt, so daß während der Herstellung des nichtporösen Körpers keine chlorhaltigen Dämpfe freigesetzt werden können.

**Patentansprüche für folgenden Vertragsstaat : GB**

1. Verfahren zur Herstellung eines nichtporösen Körpers aus hochreinem, mit $P_2O_5$ und/oder mindestens einem Metalloxid aus der Gruppe, bestehend aus Aluminium, Germanium, Titan und Bor, dotiertem Siliciumdioxid, bei dem man:

(a) einen Gasstrom erzeugt, der eine verdampfbare, chlorfreie, siliciumhaltige Verbindung, die durch thermische Zersetzung unter Oxidation oder durch Flammenhydrolyse in $SiO_2$ überführbar ist, und eine oder mehrere verdampfbare Verbindungen, die durch Oxidation oder durch Flammenhydrolyse in $P_2O_5$ und/oder mindestens

ein Metalloxid aus der Gruppe, bestehend aus Aluminium, Germanium, Titan und Bor, überführbar sind, enthält,

(b) den Gasstrom zur Bildung von mit $P_2O_5$ und/oder mindestens einem Metalloxid aus der Gruppe, bestehend aus Aluminium, Germanium, Titan und Bor, dotiertem $SiO_2$-Soot in die Flamme eines geeigneten Synthesebrenners leitet,

(c) den $SiO_2$-Soot auf einem Substrat abscheidet und

(d) entweder im wesentlichen gleichzeitig mit der Abscheidung oder daran anschließend die Ablagerung aus $SiO_2$-Soot zu einem nichtporösen Körper konsolidiert,

dadurch gekennzeichnet, daß man als verdampfbare, siliciumhaltige Verbindung ein chlorfreies Polymethylsiloxan einsetzt.

2. Verfahren nach Anspruch 1, dadurch gekennzeichnet, daß man als Polymethylsiloxan Hexamethyldisiloxan einsetzt.

3. Verfahren nach Anspruch 1, dadurch gekennzeichnet, daß man als Polymethylsiloxan ein Polymethylcyclosiloxan einsetzt.

4. Verfahren nach Anspruch 3, dadurch gekennzeichnet, daß man das Polymethylcyclosiloxan aus der Gruppe, bestehend aus Octamethylcyclotetrasiloxan, Decamethylcyclopentasiloxan und deren Gemischen, auswählt.

5. Verfahren nach einem der vorhergehenden Ansprüche, dadurch gekennzeichnet, daß man als in $P_2O_5$ und/oder mindestens ein Metalloxid aus der Gruppe, bestehend aus Aluminium, Germanium, Titan und Bor, überführbare verdampfbare Verbindung eine chlorfreie Verbindung einsetzt.

6. Verfahren nach einem der vorhergehenden Ansprüche, dadurch gekennzeichnet, daß man es zur Herstellung von Lichtleitfasern aus hochreinem Quarzgut nach dem Verfahren der Dampfabscheidung auf der Außenfläche (Outside Vapour Deposition) durch Abscheiden von $SiO_2$-Soot auf einem Substrat, Konsolidieren der Ablagerung aus $SiO_2$-Soot zu einem nichtporösen, transparenten Glaskörper und Ausziehen des Körpers zu Lichtleitfasern anwenden kann.

7. Verfahren nach einem der vorhergehenden Ansprüche, dadurch gekennzeichnet, daß man den $SiO_2$-Soot durch axiale Dampfabscheidung (Axial Vapour Deposition) auf einem Substrat abscheidet.

8. Verfahren nach einem der vorhergehenden Ansprüche, dadurch gekennzeichnet, daß der Gasstrom ein Inertgas enthält.

9. Verfahren nach einem der Ansprüche 1 bis 5, dadurch gekennzeichnet, daß der nichtporöse Körper transparent ist.

10. Verfahren nach Anspruch 1, bei dem man einen nichtporösen Körper aus hochreinem, mit Titandioxid dotiertem Quarzglas erzeugt, dadurch gekennzeichnet, daß man als siliciumhaltige Verbindung ein chlorfreies Polymethylsiloxan und als Dotierstoff eine chlorfreie titanhaltige Verbindung einsetzt, so daß während der Herstellung des nichtporösen Körpers keine chlorhaltigen Dämpfe freigesetzt werden können.

**Revendications**

**Revendications pour les Etats contractants suivants : AT, BE, CH, LI, DE, DK, ES, FR, IT, LU, NL, SE**

1. Procédé de fabrication d'un produit de silice vitreuse synthétique qui consiste à oxyder en phase vapeur un matériau précurseur de silice dans une flamme à partir d'un brûleur de synthèse convenable et à recueillir la silice à partir du courant de produits de combustion en la déposant, soit sous forme d'une masse agglomérée de fumée de silice poreuse adaptée à une densification ultérieure, soit sous forme d'un corps entièrement densifié, caractérisé en ce que pas moins de 60% de la silice dans le produit déposé est obtenu par oxydation

A) d'un ou de plusieurs composés polysiloxanes non chlorés, volatils, à chaîne droite, de formule générale

$$R_3Si. O(SiR_2O)_n . SiR_3$$

dans laquelle n est tout nombre entier, y compris zéro, et chaque R est choisi indépendamment parmi

(i) un ou plusieurs groupes alkyle de formule générale

$$C_mH_{2m+1}$$

dans laquelle m est tout nombre entier supérieur à zéro,
(ii) un ou plusieurs groupes phényle aromatiques

$$C_6H_5-$$

ou un groupe aromatique substitué
(iii) le groupe hydroxyle

$$HO-$$

(iv) le groupe vinyle

$$H_2C=CH-$$

et
(v) le groupe hydrure

$$H-$$

et/ou

B) d'un ou de plusieurs composés polysiloxanes non chlorés, volatils, cycliques, de formule générale

$$Si_p O_p (R)_{2p}$$

dans laquelle p est un nombre entier supérieur à 2, et chaque R est choisi parmi les groupes chimiques définis en (i) et (ii) ci-dessus, ou
C) d'un mélange de A) et de B).

2. Procédé selon la revendication 1, caractérisé en ce que le matériau précurseur de silice vaporisé contient une chaîne et/ou une structure cyclique polymère $(SiO)_n$.

3. Procédé selon la revendication 1 ou 2, caractérisé en ce que la moitié au moins de l'énergie libérée dans le procédé de combustion provient de la combustion du matériau précurseur de silice, et la silice est recueillie sous forme d'une masse poreuse de silice synthétique.

4. Procédé selon la revendication 1 ou 2, caractérisé en ce que le tiers au moins de l'énergie libérée dans le procédé de combustion provient de la combustion du matériau précurseur de silice, et la silice est recueillie sous forme d'un produit vitreux, essentiellement non poreux.

5. Procédé selon l'une quelconque des revendications 1 à 3, caractérisé en ce que la température du substrat dans la zone de dépôt est maintenue dans la gamme 1 000-1 300°C, et le produit est recueilli sous forme d'une masse poreuse de silice synthétique.

6. Procédé selon l'une quelconque des revendications 1 à 4, caractérisé en ce que la température du substrat dans la zone de dépôt est maintenue dans la gamme 1 500-1 950°C, et le produit est recueilli sous forme d'un produit vitreux non poreux.

7. Procédé selon l'une quelconque des revendications 1 à 6, caractérisé en ce que le corps de silice synthétique, après densification d'une masse agglomérée de fumée ou après avoir été recueilli sous forme d'un corps entièrement densifié, est transparent.

8. Procédé selon l'une quelconque des revendications précédentes, caractérisé en ce que le matériau précurseur de silice est un cyclosiloxane de formule générale $Si_nO_n(CH_3)_{2n}$, dans laquelle n vaut 4 ou 5.

9. Procédé selon l'une quelconque des revendications 1 à 7, caractérisé en ce que le matériau précurseur de silice est l'hexaméthyldisiloxane.

10. Procédé selon l'une quelconque des revendications précédentes, caractérisé en ce qu'une addition de dopage est faite à l'oxydation en phase vapeur pour modifier les propriétés du produit de silice synthétique.

11. Procédé selon la revendication 10, caractérisé en ce que l'addition de dopage est un composé non halogéné sous forme vapeur.

12. Procédé selon la revendication 10 ou 11, caractérisé en ce que l'addition de dopage inclut la vapeur d'un composé oxydable ou hydrolysable d'au moins un des éléments aluminium, germanium, phosphore, titane, bore ou fluor.

13. Procédé selon l'une quelconque des revendications précédentes, caractérisé en ce que l'oxydation en phase vapeur est réalisée à l'aide d'un brûleur de synthèse alimenté en oxygène et en gaz combustible.

14. Procédé selon la revendication 13, caractérisé en ce que le gaz combustible est l'hydrogène, le méthane, ou un mélange de ces gaz.

15. Procédé selon la revendication 13 ou 14, caractérisé en ce que le brûleur de synthèse est de conception co-annulaire.

16. Procédé selon la revendication 13, 14 ou 15, caractérisé en ce qu'un orifice interne du brûleur de synthèse est alimenté en vapeur de précurseur, éventuellement avec un gaz vecteur, et un canal externe est alimenté en oxygène, ledit orifice interne étant séparé dudit canal externe par un autre canal alimenté en gaz combustible.

17. Procédé selon l'une quelconque des revendications précédentes, caractérisé en ce que la vapeur de précurseur est diluée avec un gaz vecteur comprenant de l'hydrogène ou de l'azote.

18. Procédé selon l'une quelconque des revendications 13 à 17, caractérisé en ce que le brûleur de synthèse est chauffé.

19. Procédé selon l'une quelconque des revendications 13 à 18, caractérisé en ce que la distance entre le brûleur de synthèse et le produit déposé est contrôlée et ajustée pour maintenir une distance brûleur-substrat définie.

20. Procédé selon l'une quelconque des revendications 1 à 5 ou 7 à 19, caractérisé en ce que la masse agglomérée de fumée de silice poreuse (lorsque tel est le produit de l'étape de dépôt) est frittée (d'une manière connue en soi) pour former un produit de verre de silice synthétique transparent.

21. Procédé selon l'une quelconque des revendications 1 à 5 ou 7 à 19, caractérisé en ce que la masse agglomérée de fumée de silice poreuse (lorsque tel est le produit de l'étape de dépôt) est frittée sous vide pour former un produit de verre de silice synthétique transparent.

22. Procédé selon la revendication 21, caractérisé en ce que le produit de verre de silice synthétique transparent a une très faible teneur en hydroxyle (OH).

23. Procédé selon l'une quelconque des revendications précédentes, caractérisé en ce que le corps de silice synthétique, après densification d'une masse agglomérée de fumée ou après avoir été recueilli sous forme d'un corps entièrement densifié, est essentiellement non chloré.

24. Procédé selon l'une quelconque des revendications précédentes, caractérisé en ce que le dépôt a lieu sur un substrat fait de carbone, de graphite, d'alumine, de silice non poreuse ou de fumée de silice poreuse.

25. Procédé selon l'une quelconque des revendications précédentes, caractérisé en ce que le produit déposé se présente sous forme d'un corps cylindrique, d'un corps tubulaire, d'un creuset ou d'une préforme de fibre optique.

26. Procédé de fabrication d'un corps non poreux de silice de grande pureté dopée avec $P_2O_5$ et/ou au moins un oxyde métallique choisi dans le groupe constitué par l'aluminium, le germanium, le titane et le bore, comprenant les étapes consistant à:

(a) produire un courant gazeux contenant un composé au silicium, non chloré, vaporisable, capable d'être transformé, par décomposition thermique avec oxydation ou hydrolyse à la flamme, en $SiO_2$, et un ou plusieurs composés vaporisables capables d'être transformés, par oxydation ou hydrolyse à la flamme, en $P_2O_5$ et/ou au moins un oxyde métallique choisi dans le groupe constitué par l'aluminium, le germanium, le titane et le bore;

(b) faire passer ledit courant gazeux dans la flamme d'un brûleur de synthèse convenable pour former de la fumée de $SiO_2$ dopée avec $P_2O_5$ et/ou au moins un oxyde métallique choisi dans le groupe constitué par l'aluminium, le germanium, le titane et le bore;

(c) déposer ladite fumée de $SiO_2$ sur un substrat; et

(d) soit essentiellement en même temps que ledit dépôt, soit après ledit dépôt, consolider ledit dépôt de fumée de $SiO_2$ en formant un corps non poreux;

caractérisé en ce que ledit composé au silicium vaporisable est un polyméthylsiloxane non chloré.

**27.** Procédé selon la revendication 26, caractérisé en ce que ledit polyméthylsiloxane est l'hexaméthyldisiloxane.

**28.** Procédé selon la revendication 26, caractérisé en ce que ledit polyméthylsiloxane est un polyméthylcyclosiloxane.

**29.** Procédé selon la revendication 28, caractérisé en ce que ledit polyméthylcyclosiloxane est choisi dans le groupe constitué par l'octaméthylcyclotétrasiloxane, le décaméthylcyclopentasiloxane, et des mélanges de ceux-ci.

**30.** Procédé selon l'une quelconque des revendications 26 à 29, caractérisé en ce que ledit composé vaporisable capable d'être transformé en $P_2O_5$ et/ou au moins un oxyde métallique choisi dans le groupe constitué par l'aluminium, le germanium, le titane et le bore est un composé non chloré.

**31.** Procédé selon l'une quelconque des revendications 26 à 30, caractérisé par son utilisation pour fabriquer des fibres guides d'ondes optiques de silice fondue de grande pureté, par le procédé de dépôt en phase vapeur externe, qui consiste à déposer la fumée de $SiO_2$ sur un substrat, à consolider le dépôt de fumée de $SiO_2$ en formant un corps vitreux transparent, non poreux, et à tirer, à partir dudit corps, des fibres de guides d'ondes optiques.

**32.** Procédé selon l'une quelconque des revendications 26 à 31, caractérisé en ce que ladite fumée de $SiO_2$ est déposée sur un substrat par dépôt axial en phase vapeur.

**33.** Procédé selon l'une quelconque des revendications 26 à 32, caractérisé en ce que ledit courant gazeux comprend un gaz inerte.

**34.** Procédé selon l'une quelconque des revendications 26 à 30, caractérisé en ce que ledit corps non poreux est transparent.

**35.** Procédé selon la revendication 26 dans lequel est produit un corps non poreux de verre de silice fondue de grande pureté dopé à l'oxyde de titane, caractérisé en ce que ledit composé au silicium est un polyméthylsiloxane non chloré et en ce qu'un composé au titane non chloré est utilisé comme dopant, ce qui permet de n'émettre aucune vapeur chlorée durant la fabrication dudit corps non poreux.

**Revendications pour l'Etat contractant suivant : GB**

**1.** Procédé de fabrication d'un corps non poreux de silice de grande pureté dopée avec $P_2O_5$ et/ou au moins un oxyde métallique choisi dans le groupe constitué par l'aluminium, le germanium, le titane et le bore, comprenant les étapes consistant à:

(a) produire un courant gazeux contenant un composé au silicium, non chloré, vaporisable, capable d'être transformé, par décomposition thermique avec oxydation ou hydrolyse à la flamme, en $SiO_2$, et un ou plusieurs composés vaporisables capables d'être transformés, par oxydation ou hydrolyse à la flamme, en $P_2O_5$ et/ou au moins un oxyde métallique choisi dans le groupe constitué par l'aluminium, le germanium, le titane et le bore;

(b) faire passer ledit courant gazeux dans la flamme d'un brûleur de synthèse convenable pour former de la fumée de $SiO_2$ dopée avec $P_2O_5$ et/ou au moins un oxyde métallique choisi dans le groupe constitué par l'aluminium, le germanium, le titane et le bore;

(c) déposer ladite fumée de $SiO_2$ sur un substrat; et

(d) soit essentiellement en même temps que ledit dépôt, soit après ledit dépôt, consolider ledit dépôt de fumée de $SiO_2$ en formant un corps non poreux;

caractérisé en ce que ledit composé au silicium vaporisable est un polyméthylsiloxane non chloré.

2. Procédé selon la revendication 1, caractérisé en ce que ledit polyméthylsiloxane est l'hexaméthyldisiloxane.

3. Procédé selon la revendication 1, caractérisé en ce que ledit polyméthylsiloxane est un polyméthylcyclosiloxane.

4. Procédé selon la revendication 3, caractérisé en ce que ledit polyméthylcyclosiloxane est choisi dans le groupe constitué par l'octaméthylcyclotétrasiloxane, le décaméthylcyclopentasiloxane, et des mélanges de ceux-ci.

5. Procédé selon l'une quelconque des revendications précédentes, caractérisé en ce que ledit composé vaporisable capable d'être transformé en $P_2O_5$ et/ou au moins un oxyde métallique choisi dans le groupe constitué par l'aluminium, le germanium, le titane et le bore est un composé non chloré.

6. Procédé selon l'une quelconque des revendications précédentes, caractérisé par son utilisation pour fabriquer des fibres guides d'ondes optiques de silice fondue de grande pureté, par le procédé de dépôt en phase vapeur externe, qui consiste à déposer la fumée de $SiO_2$ sur un substrat, à consolider le dépôt de fumée de $SiO_2$ en formant un corps vitreux transparent, non poreux, et à tirer, à partir dudit corps, des fibres de guides d'ondes optiques.

7. Procédé selon l'une quelconque des revendications précédentes, caractérisé en ce que ladite fumée de $SiO_2$ est déposée sur un substrat par dépôt axial en phase vapeur.

8. Procédé selon l'une quelconque des revendications précédentes, caractérisé en ce que ledit courant gazeux comprend un gaz inerte.

9. Procédé selon l'une quelconque des revendications 1 à 5, caractérisé en ce que ledit corps non poreux est transparent.

10. Procédé selon la revendication 1, dans lequel est produit un corps non poreux de verre de silice fondue de grande pureté dopé à l'oxyde de titane, caractérisé en ce que ledit composé au silicium est un polyméthylsiloxane non chloré et en ce qu'un composé au titane non chloré est utilisé comme dopant, ce qui permet de n'émettre aucune vapeur chlorée durant la fabrication dudit corps non poreux.